# EUROPEAN PATENT APPLICATION

(11) **EP 2 348 239 A1**
(43) Date of publication of application: **27.07.2011**
(21) Application number: 10151394.3
(22) Date of filing: 22.01.2010
(51) Int. Cl.: F16L 3/22

(54) **Pipe connector**

(71) Applicant: Wavin B.V., 8011 CW Zwolle (NL)
(72) Inventor: Buirs, Geert Hilbrand, 7824 XP, Emmen (NL)
(74) Representative: HOFFMANN EITLE

(57) **Abstract**

In accordance with the present invention there is provided a connector for securing a plurality of ducts (120) in a tensile resistant manner, the connector comprising: a clamp body (140,240) which comprises a plurality of clamp members (146) and a plurality of clamp lumens (141,142,241,242) defined therebetween; wherein the plurality of clamp members (146) is responsive to a radial compression of the clamp body (140,240) to an extent that the cross- sectional area of the clamp lumens (141,142,241,242) reduces under radial compression of the clamp body (140,240). Embodiments of the invention provide a configurationally flexible connector which permits the branching of multiple ducts from a given bundle in a small-footprint arrangement.

## Description

### Field of the invention

The present invention relates to a connector for securing a plurality of ducts in a tensile resistant manner, particularly to a connector for underground utility ducts and most preferably ducts for installing underground network, power or telecommunications cables.

### Background art

Modern society, especially modern urban society, relies on high-reliability point-to-point telecommunications and utility networks. Most conveniently, especially in urban environments, such networks are provided by means of underground cabling, for example copper or fiber-optic cable.

Such cabling should be installed in the ground with a minimum of disruption to the surface, should provide a good degree of environmental isolation between the often hostile conditions and the often sensitive cabling, should permit easy installation of new cable and removal and replacement of defective cable, and should be flexible in configuration and architecture to satisfy the routing demands of modern point-to-point networks, including fiber-to-the-premises and fiber-to-the-home.

In modern installations, these requirements are met by the provision of underground ducting through which the cables are subsequently run, for example by blowing with compressed air.

Different ducting configurations are used to satisfy the various competing requirements of underground cable networks. One typical configuration involves bundles of individual optical fibres enclosed within a polymer tube. If the wall of the tube is sufficiently thick, the fibres are consequently protected from the external environment including hostile chemical conditions and applied external loading stress. Such ducting can be used over short to medium distance with no other enclosure. It may be suitable for, for example, last-mile applications, wherein the termination of the duct containing the fibre bundle is coincident with a customer premises and the bundle can thus be directly interfaced to customer equipment.

However, for several bundles of fibres such as might be found in trunk cabling or for serving a neighbourhood or group of premises, it is often convenient to provide several ducts, known as micro or mini ducts, each of which containing a bundle of fibre for a particular premises.

Two varieties of such a ducting configuration are commonly seen: one involving a number of relatively thick-walled micro ducts wrapped in a relatively thin polymer outer sleeve. Each micro duct is sufficiently thick-walled to tolerate applied environmental stresses. The polymer sleeve merely constrains the ducts relative to one another for easy handling and routing. When such a bundle is in the ground, individual micro ducts may be split off from the bundle by slitting the polymer sleeve. Such a configuration is commonly used for intermediate distances. Branching of one or more micro ducts to serve a particular group of premises is one example of such an application.

For longer distance applications, or where it is perceived that there might be a desire to add further runs of cable to a particular underground route after installation, a ducting configuration may be used wherein a plurality of thinner-walled micro ducts are contained within one thicker-walled tube, the thicker-walled tube having a wall thickness sufficient to withstand the various external stresses. In such a ducting configuration, space may be justified in the outer tube to insert further micro ducts at a later time in order to handle further fibre bundles without necessitating the digging up of an entire route to lay further ducts or bundles of ducts. As micro ducts can be inserted and withdrawn individually, access is only required at each end of the thicker-walled duct.

The various afore described ducting configurations need to be interconnected to form an end-to-end network. An example of a connector is seen in Figure 12, and is described in EP 2 045 504 Al. This prior art connector comprises a housing 1, formed of two housing halves 1A,B (only the lower halve 1A being shown). These halves can be interconnected in a watertight fashion by means of a suitable circumferential sealing rib (again not shown). The housing 1 comprises three outlets 2A, B, C, each comprising a seal body 3A,B,C and a clamp body 4A, B, C for holding a micro duct 5 or a tube 6A, C with micro ducts 5a,b,c,d in place in a water tight and tensile resistant manner. Securing means may be provided (not shown) to secure the aforementioned clamp bodies 4A-C and seal bodies 3A-C in the respective outlets 2A-C. With this known connector it is possible to connect a first tube 6A carrying a bundle of micro ducts 5a-d to two other tubes (not shown) carrying each a sub bundle of micro ducts. Alternatively, the known connector can be used to branch off (as shown) a single micro duct 5 via one of the outlets 2B. In both cases, the housing 1 offers sufficient space to connect the micro ducts 5a-d of respective bundles via suitable micro connectors 8.

If it is desired to branch off a plurality of individual micro ducts, subsequent connectors of the prior art type can be used. However, this requires considerable space and additional installation efforts. Alternatively, the known connector could be provided with further outlets. This, however, has the disadvantage of increasing the connector's footprint. Moreover, the number of outlets is limited, as the angle between the centre axes of the inlet and the respective outlets must be as close to 180° as possible, so as to allow installation of the optical fibres by compressed air.

### Summary of the invention

In accordance with the present invention there is provided a connector for securing a plurality of ducts in a tensile resistant manner, the connector comprising: a clamp body which comprises a plurality of clamp members defining a plurality of clamp lumens therebetween; wherein the plurality of clamp members is responsive to a radial compression of the clamp body to an extent that the clamp lumens reduce their cross-sectional areas. Embodiments of the invention are able to provide a configurationally flexible connector which permits multiple individual ducts to be branched off from a given bundle in a small-footprint arrangement. Moreover, the centre axes of the individual ducts can be arranged such that these do not form an impediment to installation of the optical fibers by compressed air.

As will become clearer later on, the connector also allows for simultaneous clamping of the ducts. As indicated, the securing of the ducts is in a tensile resistant manner. This may also be worded as "resistant to line pull". The forces exerted when pulling the ducts are, as a result of the clamping, passed on to the connector, so that the clamping results in stress relief for the ducts.

In accordance with an embodiment of a connector according to the invention, slits are formed between neighbouring clamp members, each slit communicating with at least one clamp lumen. Thanks to such configuration, radial compression of the clamp body may cause the slits to narrow, thereby reducing the cross-sectional area enclosed by the respective clamp lumens. Accordingly, the degree of clamping can be easily regulated by varying the width of the slit, preventing overcompression of bodies clamped in the lumen.

In accordance with an embodiment of a connector according to the invention, at least one slit extends to another clamp lumen and/or to a peripheral surface of the clamp body. The resulting connector will at the one hand have sufficient structural strength whilst at the other hand remain sufficiently flexible to deliver the required clamping action. The connector will moreover be readily manufacturable and will be able to provide a highly uniform clamping force.

In accordance with an embodiment of a connector according to the invention, the peripheral surface of the clamp body is provided with a ramp surface, for instance a conical ramp surface. Accordingly, clamping action can be activated by axially pressing the clamp body with its ramp surface against a suitable surface in the connector. The axial pressure on the ramp surface will at least partly be converted into a radial pressure onto the clamp body, causing the lumens to be reduced in area. Of course, a similar result may be obtained if the ramp surface is provided in the connector instead of on the clamp body. When axially pressing the clamp body against this ramp surface, the clamp body will be subjected to axial and radial compression.

In accordance with an embodiment of a connector according to the invention, the clamp lumens are arranged in one or more rings. Such a preferred embodiment provides a connector whose clamping force, when radially compressed, is substantially equal on each element held in each clamp lumen. This effect may be enhanced by distributing the clamp lumens evenly over the or each ring and/or by arranging the or each ring concentrically with regard to a centre axis of the clamp body.

The inner surface of the clamp lumens may be provided with at least one barb. This may enhance their ability to retain elements clamped in the voids.

In accordance with an embodiment of a connector according to the invention, notches are formed between neighbouring clamp members, not communicating with any clamp lumen. The notches may for instance extend substantially radially and may extend to the peripheral surface of the clamp body. Such a connector has enhanced overall flexibility, delivers even compression to elements in the voids and has a good resistance to fracture or permanent deformation.

In accordance with an embodiment of the invention, the connector may further comprise a seal body defining a plurality of lumens in substantially the same arrangement as the clamp lumens of the clamp member. Such connector has enhanced resistance to water ingress. The seal body is preferably made of a resilient material, such as rubber.

In accordance with an embodiment of a connector according to the invention, a peripheral surface of the seal body is provided with a ramp surface, for instance a conical ramp surface. With such a connector, the seal body can be subjected to axial and radial compression, when press-fitting or axially moving the seal body with its ramp surface against a suitable surface in the connector. Thus, excellent sealing action can be achieved through simple axial displacement of the seal body. Of course a similar result may be obtained when the ramp surface is provided in the connector instead of on the seal body. By pressing the seal body against such ramp surface, it will be subjected to axial and radial compression.

The inner surface of the lumens of the seal body may be provided with a circumferential bead. This may provide enhanced ability to seal elements located in the voids.

In accordance with an embodiment of the invention, the connector may further comprise a housing and a securing body, e.g. a nut, arranged for securing the clamp body in the housing through axial and radial compression, wherein at least one of the surfaces of the clamp body and securing body engaging each other in secured condition, and/or at least one of the surfaces of the clamp body and the housing engaging each other in secured condition, is ramp shaped. Such a connector is easy to install and de-install. Clamp action can be quickly, precisely and easily activated, with reduced friction and in a smooth manner, simply by relative axial motion of the securing body and the clamp body. Thanks to the clamp body, all ducts can be secured in a tensile resistant manner simultaneously, by applying radial pressure onto the clamp body. No need to secure each duct individually, which may save time and effort. Also, the clamp body can be of relatively compact, small design, so as to fit for instance in the outlet of a connector, thereby leaving ample space in the remainder of the connector, e.g. for interconnecting the individual ducts.

In accordance with an embodiment of a connector according to the invention, the securing body may further be arranged to secure both the seal and clamp body in the housing, through axial and radial compression, wherein the clamp body and seal body adjoin each other in secured condition. Such a connector is very easy to install; Good clamping and sealing behaviour can be obtained by simply operating the securing means so as to axially force the clamp and seal body against a surface in the housing, causing both bodies to be subjected to axial and radial compression.

The peripheral surface of the seal body and/or of the clamp body may be circular in cross-section; The clamp lumens may be circular in cross-section as well. Such connector is suitable for use with standardised ducts of circular cross-section and can be installed reliably without regard to orientation.

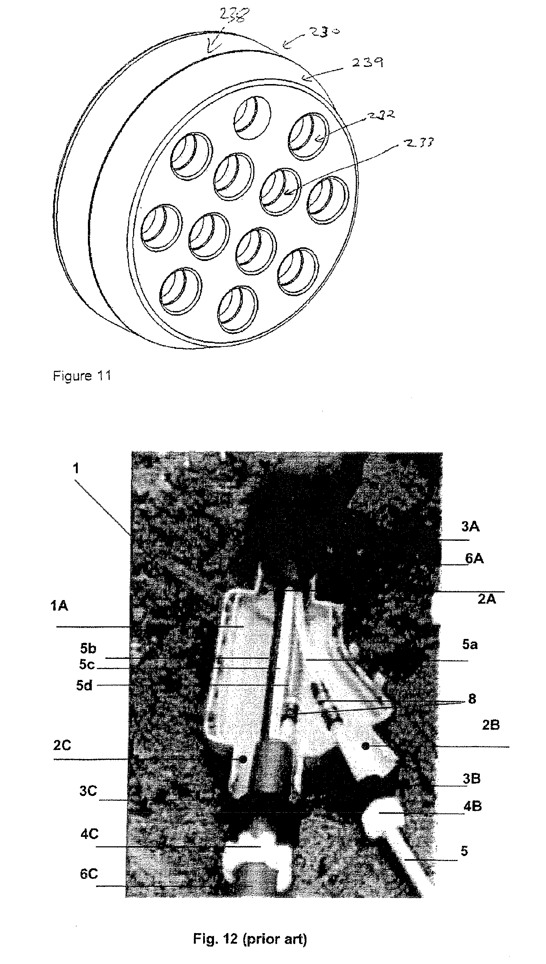

In accordance with an embodiment of the invention, the connector is provided on a shell defining an internal lumen; the shell having a plurality of outlets, at least one of which outlets is by means of the connector. Such a preferred embodiment provides a connector which has enhanced flexibility in installation and maintenance. One or more outlets of the connector can be provided with a clamp body and possibly a seal body according to the invention, whereas the remaining outlet(s) can be provided with a clamp and seal body according to the prior art shown in Figure 12. Thus a connector according to the invention can be readily adapted so as to be able to connect all types of ducting configurations that are needed to form an end-to-end network.

The invention further relates to a method of installing a bundle of ducts into a connector according to the invention, comprising the steps of inserting the ducts into corresponding lumens of the clamp body; inserting plugs in remaining lumens if the number of lumens exceeds the number of ducts; and radially compressing the clamp body, thereby securing the ducts in their respective lumens, substantially simultaneously. Thus, a bundle of ducts can be quickly mounted into a connector, wherein all ducts are simultaneously yet individually secured in a tensile resistant manner.

In accordance with an embodiment of the invention, installation of the bundle of ducts can be further facilitated by cutting off each duct at a different length. As a result, the end of the bundle will not be flat, but will feature respective duct ends projecting from the bundle over different lengths. Accordingly, instead of having to fumble the duct ends into the corresponding lumens all at once, it is possible to insert the duct ends one by one, starting with the longest end and ending with the shortest end. A special cutting tool may be developed to allow the bundle to be cut off according to the invention in a single cutting operation.

### Brief Description of the Drawings

For a better understanding of the present invention and to show how the same may be carried into effect, reference will now be made, by way of example only, to the accompanying Drawings in which:
Figure 1 shows a connector being a first embodiment of the present invention;
Figure 2 shows the connector in Figure 1 in exploded configuration with one half of the nut removed;
Figure 3 shows the arrangement of Figure 2 with the nut completely removed and half the housing removed;
Figure 4 shows the clamp body used in Figure 1 to 3;
Figure 5 shows the clamp body of Figure 4 in plan view;
Figure 6 shows a seal body for use in conjunction with the clamp body of Figure 4;
Figure 7 shows a variant on the clamp body of Figure 4 having larger clamp lumens;
Figure 8 shows an alternative arrangement to that of Figures 1-3 with the housing, the securing body and three ducts absent;
Figure 9 shows the clamp body used in the arrangement of Figure 8 ;
Figure 10 shows the clamp body of Figure 9 in plan view;
Figure 11 shows a seal body for use in conjunction with the clamp body of Figure 9; while
Figure 12 shows a prior art connector as described in EP 2 045 504 A1, useful for understanding the utility of the present invention.

### Description

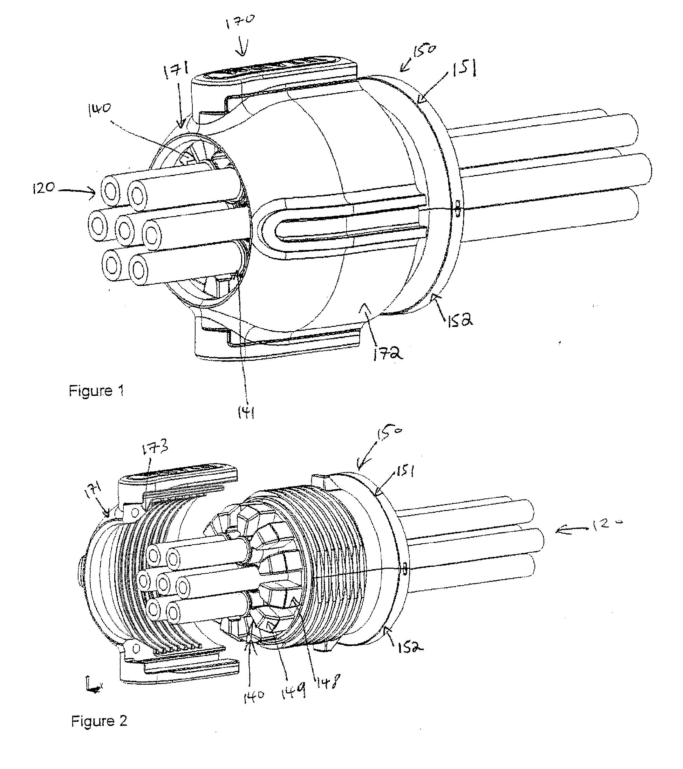

Figure 1 shows a connector, more particular an outlet thereof, according to a first embodiment of the present invention. In Figure 1, we see a securing body, more particularly a nut 170 screwed onto a housing 150. To facilitate assembly, the nut 170 and housing 150 may be formed in two cooperating halves 171 and 172, respectively 151 and 152. The nut 170 and the housing 150 enclose between them a clamp body 140 having a plurality of clamp members 146 and clamp lumens 141, 142. Each clamp lumen 141, 142 holds one of a bundle of seven ducts 120. In use, housing 150 may extend to interface with a single pipe enclosing bundle or may be formed onto a connector shell such as that described in EP 2 045 504 A1.

Figure 2 shows the arrangement of Figure 1 with one halve of the nut 170 removed. Accordingly, the clamp body 140 is more easily seen, partially enclosed within housing 150.

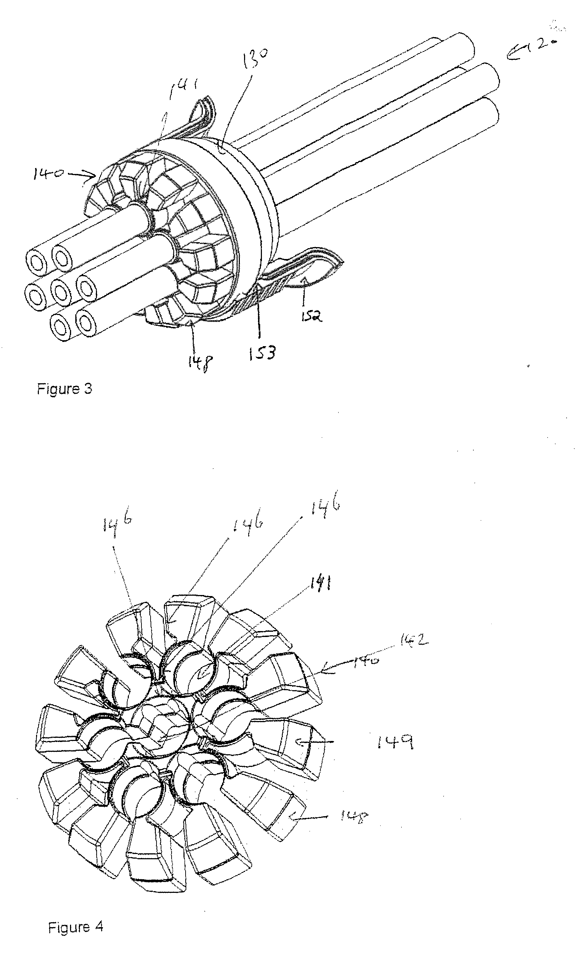

Turning now to Figure 3, the housing 150 has been divided and half-housing 151 is no longer visible. Enclosed within half housing 152 is clamp body 140 and a seal body 130, which defines seal lumens 131 (not visible) which correspond to the clamp lumens 141, 142 of clamp body 140.

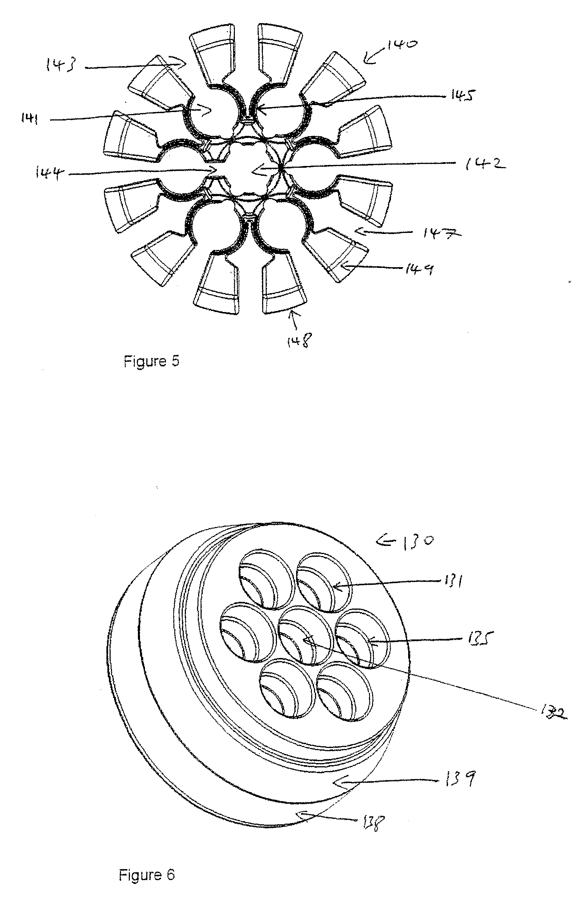

Figure 4 and 5 show clamp body 140 in more detail. Clamp lumens 141, 142 are sized to accommodate particular gauges of duct which will be held by the clamp body 140. There is no reason why lumens 141, 142 need all be the same size, but for compatibility with a particular family of ducts this is likely to be the case in practice.

The outer peripheral surface 148 of clamp body 140 is divided by slits 143 and notches 147. The slits 143 each communicate with a lumen 141, the notches 147 do not. Thanks to such slits 143, the cross sectional area of the respective clamp lumens can be reduced by radial compression, allowing the or each lumen to grip any duct or other object placed therein.

In the present embodiment, the slits 143 widen towards the peripheral surface 148. Of course, in an alternative embodiment, the width of the slits 143 may be substantially constant or may vary in another way.

The notches 147 are somewhat arrow head-shaped, as seen in plan view (Figure 5), thereby providing the clamp members 146 with thin circumferential wall portions, which can flex easily.

In the illustrated embodiment, the clamp lumens 141 are arranged in a ring, one clamp lumen 142 being positioned in the centre of this ring. A slit 144 is provided, which communicates between the centre lumen 142 and one of the surrounding clamp lumens 141 . This slit 144 has the same effect as slits 143, in allowing a radial clamping action to take place with respect to the clamp lumen 142.

in the illustrated embodiment, the dimensioning of the slits 143 and notches 147 is such that a substantial proportion, for instance approximately half of the outer periphery 148 of the clamp body 140 remains and is structurally sufficiently rigid to provide for effective radial force transmission from the peripheral surface 148 of the clamp body 140 to the clamp members 146 surrounding the lumens 141, 142.

By means of such an arrangement, radial pressure brought to bear on the clamp body 140, and more particularly on the clamp members 146, will tend to close the clamp lumens 141, 142, reducing their cross sectional area while approximating the walls of the slits 143 and notches 147, leading to any object of suitable diameter located in a clamp lumen being gripped firmly.

In some cases, it is preferable to provide at least one barb 145 on the interior of each clamp lumen 141 and 142 to bite the object being clamped and provide increased resistance to relative axial displacement thereof.

Part of the peripheral surface 148 of the illustrated clamp body 140 is ramp shaped 149, i.e. extending axially from the peripheral surface 148 and decreasing in radial cross-section to join one face of the clamp body 140. Such a feature allows the clamp body 140 to undergo radial compression, and thus initiate clamp action by means of an axial displacement, ramp surface 149 foremost, into a passageway of radius smaller than the uncompressed clamp body 140. For example, were the clamp body 140 to be pushed, ramp surface 149 foremost, into a circular pipe of slightly smaller diameter, pressure from the outer wall of the pipe on the ramp surface would enable the relative axial motion between the clamp body and the pipe to radially compress the clamp body, gripping any object of suitable diameter located in the clamp lumens.

The utility of such an arrangement can readily be contemplated, since the clamping action of the clamp body can be activated merely by axial compression against an object of suitable diameter. This property is seen to have particular utility when used in an arrangement such as that shown in Figure 1, as will be described.

The seal body 130 shown in Figures 3 and 6 is formed of a resilient material, such as a rubber. It is provided with a peripheral surface 138, a ramp surface 139, and seal l lumens 131 and 132 each having a sealing bead 135, for forming a water-tight seal around the respective ducts inserted through the sealing lumens.

Thanks to the ramp surface 139 any axial force exerted on the seal body 130 during assembly, will be converted into a radial compression of the seal body 130, thereby enhancing the sealing performance of the seal body 130.

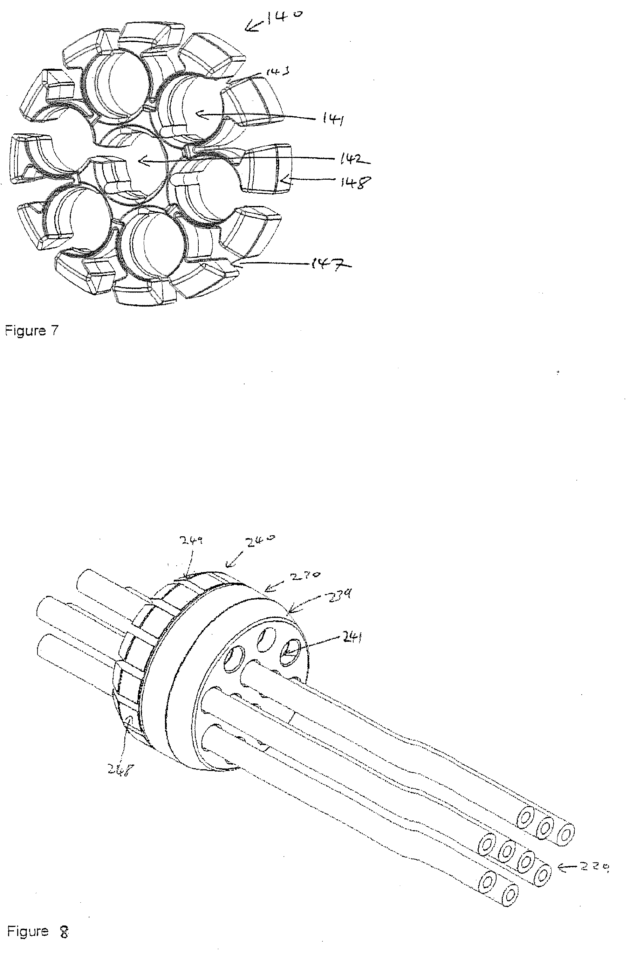

Of course, the number, location and size of the lumens 141, 142; 131, 132 in the clamp body 140 and seal body 130 can be varied, to accommodate a different number of ducts and/or ducts of different diameter. Figure 7, for instance, shows an embodiment of a clamp body according to the invention, intended to grip ducts of greater diameter than the clamp body 140 of Figure 4. Of course, the seal body 130 may be adapted accordingly.

The configuration shown in Figure 3 can be axially press-fitted, clamp body 140 foremost, into the end of a pipe housing a plurality of ducts, such as pipe 6A,C shown in Figure 12.

To arrive at the arrangement of Figure 1, the arrangement of Figure 3 is inserted into a half-housing 152 such that the ramp surface 139 of seal body 130 abuts an inner surface 153 of half-housing 152, which in the illustrated embodiment (see Figure 3) is ramp shaped as well and adapted to engage with and radially compress the ramp surface 139 of the seal body 130 when the seal body is translated axially further into the housing.

Housing 150 may be formed to extend further behind the connector to provide a working box in which to carry out operations on individual ducts in a sealed environment away from the hostile external environment. Accordingly, in this embodiment housing 150 is provided as a two-part or clamshell arrangement whereby a top part may be lifted off to expose the working space behind the connector. Of course, where such requirements are not of importance, a one-piece housing may alternatively be provided, optionally including for example, an access panel or door. At least, spring clips, catches, screws or press-studs are all within the scope of suitable fastening means.

The housing may even be formed onto the end of a long cylindrical cable pipe in either a one piece or two piece configuration. The housing may be held together by fastening means not shown, which will be well within the ambit of the skilled reader to identify.

When both half-housings 151 and 152 are brought together to enclose seal body 130 and partially enclose clamp body 140, the connector looks similar to that depicted in Figure 3. A securing body may subsequently be mounted onto the housing so as to secure the housing halves, seal body 130 and clamp body 140 in place. In the illustrated embodiment the securing body comprises a nut 170, shown in two halves 171 and 172 in Figures 1 and 2, but also providable as a single-piece construction, may now be screwed onto the threaded exterior of housing 150, the nut having a correspondingly threaded interior. If the nut is formed in two-part form, it may be provided with fastening means to couple the two halves together.

An alternative to providing a helical thread on the nut is to provide a series of ridges on the housing 150 and a corresponding set of ridges to the nut 170 which interlock but which do not form a screw thread. In such a configuration, the nut can be fitted onto the housing by direct clamping, aligning the troughs of one set of ridges with the peaks of the other set of ridges and then tightening the fastening means holding the two parts of the nut together. The advantage of such a configuration is that the two halves of the nut may be held together by security fasteners, thereby inhibiting unauthorised disassembly once fixed in place. Furthermore, the lack of a thread will further prevent water and other environmental contaminants from penetrating the interior of the joint between nut and housing.

Whether screwed on by means of thread or clamped on, nut 170 has an inner surface 173 (see Figure 2) which is adapted to engage with and radially compress the ramp surface 149 of clamp body 140, such that either axial approximation of nut and clamp body by means of a screw action on a nut or simple radial pressure from inner surface 173 to ramp surface 149 caused by, for example, compression together of the two halves 171 and 172 of nut 170 will tend to radially compress clamp body 140 and thus clamp duct 120 in place.

The configuration resulting from such a process is shown in Figure 1.

Of course, the same principles can be applied to a variety of duct configurations by appropriate modification of the lumen, notch and slit pattern of the clamp body 140.

For example, Figures 8 to 11 relate to another embodiment of the invention which operates in a similar manner but is able to accommodate twelve, rather than seven, ducts. Such numbers are of course exemplary and the skilled person will determine alternative possible configurations to suit each application.

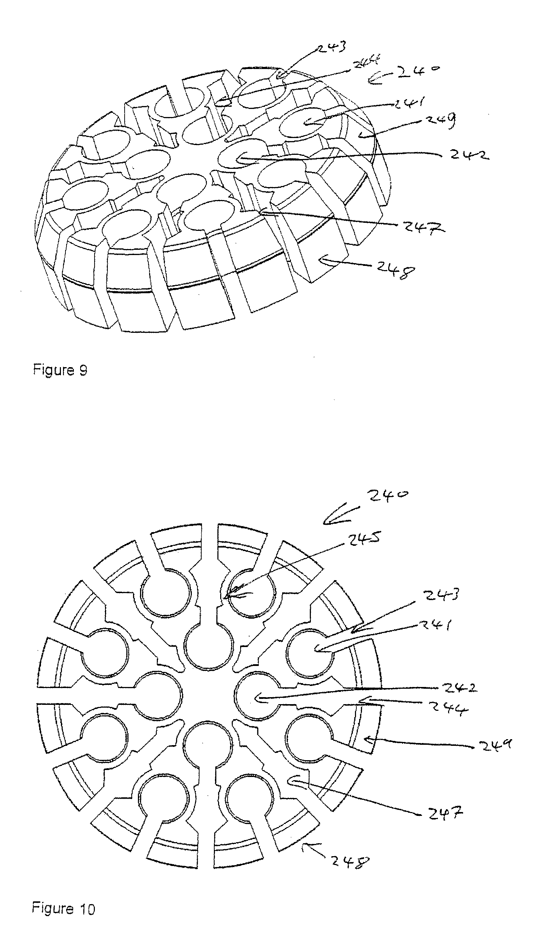

It is easiest to understand the differences between the embodiment of Figures 8 to 11 and the embodiment of Figures 1 to 7 by a comparison of Figures 5 and 10, which both relate to a clamp body seen in plan view. In the embodiment of Figure 5, clamp body 140 has an outer ring of clamp lumens 141 each having a circumferential slit 143 communicating with peripheral surface 148. There is a central clamp lumen 142, communicating with one of the outer ring of clamp lumens 141 by means of slit 144. Accordingly, this embodiment demonstrates that it is not necessary to communicate inner clamp lumen(s) 142 directly with the peripheral surface 148. Instead, these inner clamp lumen(s) can be communicated with one or more other lumens 141 located between the inner lumen(s) 142 and the peripheral surface 148 to allow the compression and clamping action to take place. In contrast, in Figure 10, in which corresponding elements are labelled starting from 240 rather than 140, an inner ring of clamp lumens 242 is provided together with an outer ring of clamp lumens 241, each ring communicating with the peripheral surface 248 by means of first and second slits 243 and 244. Notches 247 remain present to provide flexibility. It will be noticed from Figure 10 that the second slits 244 and notches 247 do not have a purely straight-walled configuration, but rather, where they pass between two outer lumens 241, the wall of the slits 244 and notches 247 is shaped to provide a region of thinned circumferential wall to the wall surrounding the lumens 241, to provide increased flexibility.

It is even contemplated that, if the material from which the clamp body is made has sufficient resilience, slits need not even extend to connect with the peripheral surface and/or to proximate lumens, but merely should extend so deep as to allow the area of the clamp lumens to reduce under radial compression of the clamp body. Slits may therefore extend only a short distance radially, or almost the full distance to the surface or proximate lumen, as the parameters of the material allow. It will be within the ambit of the skilled person to identify alternative patterns of holes, slits and notches which may suit their particular requirements. It needs hardly to be said that if a seal body is to be provided, the holes should preferably be formed in a corresponding manner, as indicated in Figure 11.

The material from which the claim body is made will, relative to rubber, be non-resilient. The flexing of the clamp members will contribute significantly to the clamping, as compared to the contribution, if any, of the resiliency of the material. A practical embodiment of the clamp body will be made of plastic.

Of course, in any embodiment, not all the lumens may be required to accommodate ducts. In such cases, a solid plug of comparable width to a cable duct may be installed in the unused lumens to provide sealing and to ensure even application of clamping action.

It will, of course, be clear to the skilled person that, for a highly flexible configuration, a shell such as that depicted in Figure 12 can be formed having housing 152 at each or some of the various outlet ports of the shell, the connector of the present invention therefore advantageously providing outlets for varying configurations of ducts to the enclosure formed by the shell.

Of course, the present invention is not limited to the previously-described embodiments, but encompasses all equivalents and modifications which will be apparent to the skilled person when contemplating the above disclosure, the described invention, its benefits and advantages, and the variety of situations in which it might be employed.

## Claims

1. A connector for securing a plurality of ducts in a tensile resistant manner, the connector comprising:
a clamp body which comprises a plurality of clamp members and a plurality of clamp lumens defined therebetween;
wherein the plurality of clamp members is responsive to a radial compression of the clamp body to an extent that the cross-sectional area of the clamp lumens reduces under radial compression of the clamp body.

2. The connector of claim 1, wherein the clamp members extend substantially radially.

3. The connector of claim 1 or 2, wherein slits are formed between neighbouring clamp members, each slit communicating with at least one clamp lumen.

4. The connector of claim 3, wherein at least one slit extends to another clamp lumen and/or to a peripheral surface of the clamp body.

5. The connector of any preceding claim, wherein notches are formed between neighbouring clamp members, not communicating with any clamp lumen.

6. The connector of claim 5, wherein at least one notch extends to a peripheral surface of the clamp body.

7. The connector of any preceding claim, wherein the peripheral surface of the clamp body is provided with a ramp surface.

8. The connector of any preceding claim, wherein the clamp lumens are arranged in one or more rings.

9. The connector of any preceding claim, comprising a seal body defining a plurality of lumens in substantially the same arrangement as the clamp lumens of the clamp body.

10. The connector of claim 9, wherein a peripheral surface of the seal body is provided with a ramp surface.

11. The connector of any preceding claim, comprising a housing and a securing body, arranged for securing the clamp body in the housing through axial and radial compression, wherein at least one of the surfaces of the clamp body and securing body engaging each other in secured condition, and/or at least one of the surfaces of the clamp body and the housing engaging each other in secured condition, is ramp shaped.

12. The connector of claim 11, wherein the housing and securing body are arranged to secure the clamp body and a seal body according to claim 9 or 10 in the housing through axial and radial compression, wherein the clamp body and seal body adjoin each other in secured condition.

13. The connector of any preceding claim, wherein the connector is provided on a shell defining an internal lumen; the shell having a plurality of outlets, at least one of which outlets is by means of the connector.

14. A method of installing a bundle of ducts into a connector of any preceding claim, comprising the steps of:
- inserting the ducts into corresponding lumens of the clamp body;
- inserting plugs in remaining lumens if the number of lumens exceeds the number of ducts;
- radially compressing the clamp body, thereby securing the ducts in their respective lumens, substantially simultaneously.

15. The method of claim 14, wherein the ducts are cut off at different lengths and inserted into the lumens of the clamp body one by one, in order of their respective lengths, starting with the longest duct and ending with the shortest duct.
